Europäisches Patentamt

European Patent Office

Office européen des brevets

(11) Veröffentlichungsnummer: **0 505 828 A1**

## (12) EUROPÄISCHE PATENTANMELDUNG

(21) Anmeldenummer: **92104120.8**

(22) Anmeldetag: **11.03.92**

(51) Int. Cl.5: **G02B 6/28**

(30) Priorität: **27.03.91 DE 4109982**

(43) Veröffentlichungstag der Anmeldung:
**30.09.92 Patentblatt 92/40**

(84) Benannte Vertragsstaaten:
**AT BE CH DE DK ES FR GB IT LI NL SE**

(71) Anmelder: **Standard Elektrik Lorenz Aktiengesellschaft
Lorenzstrasse 10
W-7000 Stuttgart 40(DE)**

(84) **DE**

(71) Anmelder: **ALCATEL N.V.
Strawinskylaan 537 (World Trade Center)
NL-1077 XX Amsterdam(NL)**

(84) **BE CH DK ES FR GB IT LI NL SE AT**

(72) Erfinder: **Rossberg, Rolf
Thüringer Strasse 17
W-7141 Schwieberdingen(DE)**

(74) Vertreter: **Pohl, Herbert, Dipl.-Ing et al
Standard Elektrik Lorenz AG Patent- und
Lizenzwesen Postfach 30 09 29
W-7000 Stuttgart 30(DE)**

(54) **Verfahren zur Herstellung eines optischen Verschmelzkopplers.**

(57) Für die Herstellung eines dämpfungsarm einspleißbaren Verschmelzkopplers (1), der insbesondere in faseroptischen Verstärkern als Pumplichtkoppler dient und der nur eine geringe Polarisationsempfindlichkeit aufweist, werden handelsübliche Einmodenfasern verwendet.

Das eingangsseitige Faserpaar (Faserenden 4, 5) und das ausgangsseitige Faserpaar (Faserenden 6, 7) von zwei miteinander verschmolzenen Faserstücken (2, 3) werden nach beendetem Ausziehvorgang und nach Unterbrechung der Wärmezufuhr gegeneinander um etwa 180° um ihre gemeinsame Achse gedreht und in dieser Lage fixiert.

FIG.1

Die Erfindung betrifft ein Verfahren zur Herstellung eines optischen Verschmelzkopplers nach dem Oberbegriff des Anspruchs 1. Solche Koppler werden insbesondere in Systemen der optischen Nachrichtentechnik verwendet.

In der Druckschrift "ELECTRONICS LETTERS vom 12. April 1990, Band 26, Nr. 8, Seiten 523 und 524" wird von J.D. Minelly und M. Suyama unter dem Titel "WAVELENGTH COMBINING FUSED-TAPER COUPLERS WITH LOW SENSITIVITY TO POLARISATION FOR USE WITH 1480nm-PUMPED ERBIUM-DOPED FIBRE AMPLIFIERS" ein Verschmelzkoppler beschrieben, der aus einer speziellen Faser mit einer Cutoff-Wellenlänge von 1450 nm und einer numerischen Apertur von 0,2 hergestellt wird. Von den optischen Eigenschaften her zeigt dieser Verschmelzkoppler zwar das z.B. beim Einsatz in faseroptischen Verstärkern gewünschte Verhalten nur schwach polarisationsempfindlich zu sein, jedoch verursachen dessen Fasern an der Spleißstelle zu handelsüblichen Einmodenfasern, wie sie für die Übertragungsstrecken von Signallicht verwendet werden, wegen voneinander abweichender Modenfelddurchmesser, eine erhöhte Dämpfung. Außerdem ist die Spezialfaser nicht handelsüblich, schwierig zu beschaffen und daher entsprechend teuer.

In einem anderen Artikel der Druckschrift "ELECTRONICS LETTERS vom 15. März 1990, Band 26, Nr. 6, Seiten 382 bis 384" berichten I.J. Wilkinson und C.J. Rowe über Verschmelzkoppler, bei denen durch Verdrehen der Faserpaare nach dem Ausziehen zum Koppler Polarisationsunabhängigkeit erreicht wurde. Über den verwendeten Fasertyp ist keine Aussage gemacht. Auch darüber nicht, ob Koppler mit dieser Eigenschaft auch für Wellenlängen 1480/1550 nm herstellbar sind.

Im Fachhandel sind ferner wellenlängenselektive Verschmelzkoppler für verschiedene Wellenlängen und für unterschiedliche Kanalabstände erhältlich, die aus handelsüblichen Einmodenfasern mit 9 $\mu$m oder 10 $\mu$m Kerndurchmesser und 125 $\mu$m Manteldurchmesser, die beispielsweise der CCITT-Norm G.652 entsprechen, hergestellt sind. Diese Koppler zeigen sich jedoch bei bestimmten Wellenlängen und bei bestimmten Kanalabständen in ihren Eigenschaften abhängig von der Polarisationsrichtung des Lichtes.

Verschmelzkopper für die Wellenlängen 1480/1550 nm aus normalen, handelsüblichen Einmodenfasern sind an sich besonders als Pumplichtkoppler für faseroptische Verstärker geeignet. Solche Koppler sind aber stark polarisationsabhängig. Diese Abhängigkeit macht sich als Schwankung in der Verstärkungsleistung negativ bemerkbar.

Der Erfindung liegt die Aufgabe zugrunde, ein Verfahren zur Herstellung eines optischen Verschmelzkopplers aus einer handelsüblichen Einmodenfaser (9/125 $\mu$m bis 10/125 $\mu$m) anzugeben, der eine geringe Polarisationsempfindlichkeit aufweist und sich insbesondere als Pumplichtkoppler für die Verwendung in faseroptischen Verstärkern eignet. Diese Aufgabe wird erfindungsgemäß mit den im Anspruch 1 angegebenen Merkmalen gelöst. Vorteile der Lösung sind in der Beschreibung erwähnt.

Die Erfindung wird anhand eines in einer Zeichnung dargestellten Ausführungsbeispieles wie folgt näher erläutert. In der Zeichnung zeigen:

Fig. 1      einen fertigen Verschmelzkoppler, schematisch dargestellt;

Fig. 2      den Verschmelzkoppler der Fig. 1, während der Herstellung.

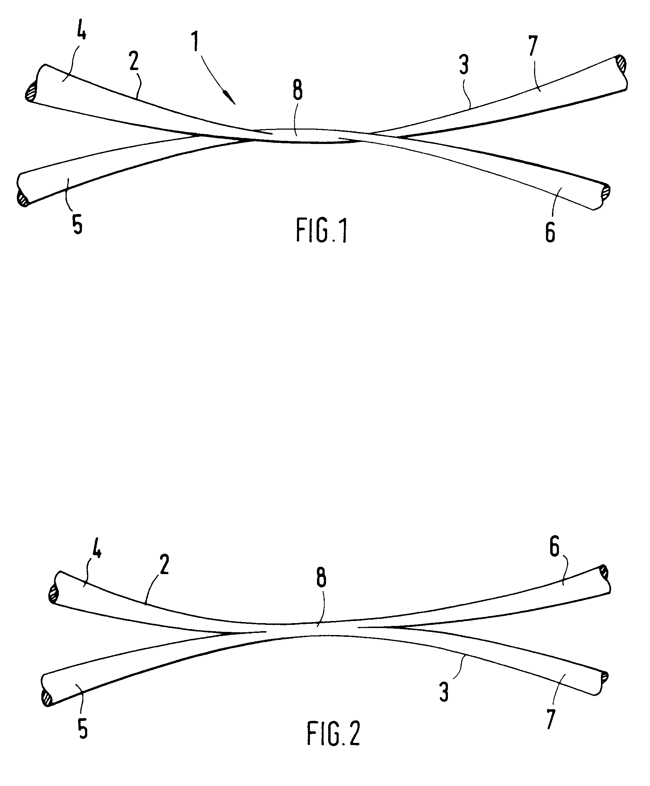

Für die Herstellung des in Fig. 1 dargestellten Verschmelzkopplers 1 dient eine handelsübliche Einmodenfaser vom Typ matched cladding mit 9 bis 10 $\mu$m Kerndurchmesser und 125 $\mu$m Manteldurchmesser nach CCITT-Norm G.652 als Basismaterial. Aus einer derartigen Faser werden zwei abgelängte Faserstücke 2, 3 in bekannter Weise abgemantelt, gereinigt und in eine Ziehvorrichtung eingelegt (nicht dargestellt), so daß sie an der den späteren Koppelbereich bildenden Stelle in einer Ebene parallel aneinanderliegen. Anschließend werden die Faserstücke 2, 3 in der Ziehvorrichtung fixiert und in eines von zwei benachbarten Faserenden 4, 5 Licht einer ausgewählten Wellenlänge eingekoppelt, das an beiden entgegengesetzten Faserenden 6, 7 detektiert werden kann. Danach werden die Faserstücke 2, 3 an der Berührungsstelle unter Einwirkung von Wärme miteinander verschmolzen und die Faseranordnung gleichzeitig in axialer Richtung ausgezogen (Fig. 2), wobei im Verschmelzbereich 8 ein Überkoppeln des Lichtes erfolgt.

Soll der fertige Verschmelzkoppler 1 z.B. einen Kanalabstand von 70 nm haben, läßt man das Licht einer ausgewählten Wellenlänge von z.B. 1480 nm während des Ziehvorgangs 19 bis 20 mal von einem Faserstück 2 zum anderen Faserstück 3 überkoppeln. Nach Erreichen der erwähnten Anzahl Überkopplungen wird der Ausziehvorgang gestoppt und die Wärmezufuhr unterbrochen. Die Ausziehlänge des Verschmelzkopplers 1 beträgt bei Anwendung einer Gasflamme, abhängig von der Breite der Flamme, in diesem Stadium etwa 15 bis 25 mm. Unmittelbar nach beendetem Ausziehvorgang und nach Unterbrechung der Wärmezufuhr wird das aus zwei in einer Ebene benachbart liegenden Faserenden 4, 5 gebildete eingangsseitige Faserpaar der einen Anschlußseite und das von den entsprechenden Faserenden 6,7 der gegenüberliegenden Anschlußseite gebildete ausgangsseitige Faserpaar des Kopplers gegeneinander um etwa 180° um ihre gemeinsame Achse gedreht. Anschließend wird der Verschmelzkoppler 1 der Ziehvorrichtung entnommen und in der gedrehten Lage fixiert, z.B. durch Einbetten in eine Quarzglas-Halbschale.

Der nach diesem Verfahren hergestellte Verschmelzkoppler 1 ist wellenlängenselektiv und nahezu polarisationsunabhängig. Die sonst übliche Kanaltrennung von z.B. 12 dB ist bei diesem Koppler beträchtlich höher und übertrifft 20 dB. Wird der Verschmelzkoppler 1 als Pumplichtkoppler bei noch größeren Wellenlängenabständen, wie z.B. 800/1550 nm oder 980/1550 nm eingesetzt, ist er völlig polarisationsunabhängig. Der nicht für das Pumplicht benutzte Zweig des Kopplers kann für Monitorzwecke und zur Regelung der Pumplichtquelle herangezogen werden, da bei hohen Pumplichtleistungen und trotz hoher Übersprechdämpfung (ca. 25 dB bis 30 dB) in dem unbenutzten Zweig noch ein detektierbares Signal zur Verfügung steht.

**Patentansprüche**

1. Verfahren zur Herstellung eines optischen Verschmelzkopplers, insbesondere eines Pumplichtkopplers für faseroptische Verstärker, bei dem wenigstens zwei in einer Ebene nebeneinander liegende, Einmodenfasern nach CCITT-Norm G.652, die ein eingangsseitiges und ein ausgangsseitiges Faserpaar bilden, unter Einwirkung von Wärme miteinander verschmolzen und in axialer Richtung ausgezogen werden, **dadurch gekennzeichnet,** daß nach beendetem Ausziehvorgang des Verschmelzkopplers (1) und Unterbrechen der Wärmezufuhr das eingangsseitige Faserpaar (Faserenden 4, 5) und das ausgangsseitige Faserpaar (Faserenden 6, 7) gegeneinander um etwa 180° um ihre gemeinsame Achse gedreht und in dieser Lage fixiert werden.

2. Verfahren nach Anspruch 1, dadurch gekennzeichnet, daß man bei der Herstellung eines Verschmelzkopplers (1) für die Wellenlänge 1480/1550 nm mit einem Kanalabstand von 70 nm, das in ein Faserende (4) eingekoppelte und an beiden entgegengesetzten Faserenden (6, 7) detektierte Licht während des Ausziehvorganges etwa 19 bis 20 mal überkoppeln läßt und dann den Ausziehvorgang stoppt.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 404 587 (FUJIKURA) <br> * Anspruch 5 * <br> --- | 1 | G02B6/28 |
| Y | PATENT ABSTRACTS OF JAPAN <br> vol. 15, no. 198 (P-1204)22. Mai 1991 <br> & JP-A-3 050 507 ( HITACHI CABLE ) 5. März 1991 <br> * Zusammenfassung * <br> --- | 1 | |
| Y | US-A-4 796 968 (COCCOLI ET AL.) <br> * Anspruch 20; Abbildung 3 * <br> --- | 1 | |
| A | WO-A-8 912 243 (UNIVERSITY OF SOUTHAMPTON) <br> * das ganze Dokument * <br> --- | 1 | |
| A | EP-A-0 416 640 (STANDARD ELEKTRIK LORENZ) <br> * Zusammenfassung; Ansprüche 1,7 * <br> --- | 1,2 | |
| D,A | ELECTRONICS LETTERS. <br> Bd. 26, Nr. 8, 12. April 1990, STEVENAGE GB <br> Seiten 523 - 524; <br> MINELLY ET AL.: 'Wavelength combining fused-taper coupler with low sensivity to polarisation for use with 1480nm-pumped Erbium-doped fibre amplifiers' <br> * das ganze Dokument * <br> --- | 1,2 | |
| D,A | ELECTRONICS LETTERS. <br> Bd. 26, Nr. 6, 15. März 1990, STEVENAGE GB <br> Seiten 382 - 384; <br> WILKINSON ET AL.: 'Close-spaced fused fibre wavelength division multiplexers with very low polarisation sensitivity' <br> * das ganze Dokument * <br> ----- | 1,2 | |

RECHERCHIERTE SACHGEBIETE (Int. Cl.5)

G02B

Der vorliegende Recherchenbericht wurde für alle Patentansprüche erstellt

| Recherchenort | Abschlußdatum der Recherche | Prüfer |
|---|---|---|
| BERLIN | 15 MAI 1992 | HYLLA W. |